# EUROPÄISCHE PATENTANMELDUNG

(11) **EP 3 628 145 A1**
(43) Veröffentlichungstag der Anmeldung: **01.04.2020**
(21) Anmeldenummer: 18196442.0
(22) Anmeldetag: 25.09.2018
(51) Int. Cl.: A01G 3/00

(54) **VORRICHTUNG ZUR PFLANZENVERARBEITUNG**

(71) Anmelder: Alcontec GmbH, 6235 Winikon (CH)
(72) Erfinder: Gafner, Peter, 5723 Teufenthal (CH); Freund, Thomas, 6130 Willisau (CH); Kurmann, Remo, 6010 Kriens (CH); Theiler, Michael, 5057 Reitnau (CH)
(74) Vertreter: Herrmann, Johanna

(57) **Zusammenfassung**

Eine Vorrichtung (1) zur Verarbeitung von Pflanzen umfasst ein Gehäuse (10), welches eine Trennvorrichtung (20) enthält. Die Pflanzen sind auf einem Auflageelement (11) gelagert, wobei das Auflageelement (11) zwischen den Pflanzen und der Trennvorrichtung (20) angeordnet ist. Eine Absaugvorrichtung (30) zur Förderung der Pflanzen ist vorgesehen, mittels welcher die Pflanze über die Trennvorrichtung (20) bewegbar ist.

## Beschreibung

Die vorliegende Erfindung betrifft eine Vorrichtung zur Pflanzenverarbeitung. Insbesondere betrifft die Erfindung eine Vorrichtung zur mechanischen Trennung von einzelnen Teilen einer Pflanze, insbesondere einer Nutzpflanze.

Verschiedenste Pflanzen können nur teilweise verwertet werden, das heisst, Teile der Pflanzen eignen sich für die Verwertung nicht und müssen daher vor der Weiterverarbeitung von den verwertbaren Pflanzenteilen getrennt werden. Für diese nicht verwertbaren Teile kann entweder eine Verarbeitung nicht vorgesehen sein oder eine andere Verarbeitung erforderlich sein.

Beispielsweise sind bei Tabakpflanzen nur die Blätter der Pflanzen für die Weiterverarbeitung erwünscht, bei Cannabispflanzen, je nach Bedarf nur deren Blätter und/oder Knospen oder Blüten oder Stängel. Für andere Pflanzensorten müssen wiederum die Blüten von den Blättern getrennt werden.

Die Arbeitsschritte zur Gewinnung der nutzbaren Teile der Pflanze werden in oftmals manuell erledigt, was aber zeitintensiv und mit nicht unbeträchtlichen Kosten verbunden sein kann. Eine manuelle Trennung der Blätter von den Blüten oder Knospen der Pflanzen ist daher für grössere Mengen von Pflanzen, die auf grösseren Anbauflächen insbesondere zu kommerziellen Zwecken kultiviert werden, unwirtschaftlich. Aus diesem Grund gab es in der Vergangenheit bereits verschiedene Ansätze, diesen Arbeitsschritt zu automatisieren.

### Stand der Technik

Eine Vorrichtung zur Entfernung von Blättern von Knospen ist beispielsweise aus der US20120291411 A1 bekannt. Diese Vorrichtung umfasst ein zylindrisches oder konisches behälterförmiges Gehäuse, in welchem sich eine kreisförmige Lochplatte, eine über der Lochplatte liegende Kammer zur Aufnahme der Pflanzen und eine unterhalb der Lochplatte liegende Kammer zur Aufnahme der von einer Trennvorrichtung abgetrennten Blätter aufweist. Die Trennvorrichtung ist als ein von einem Antriebsmotor angetriebenes Fadenelement ausgebildet. Das Fadenelement erfasst bei ausreichender Drehgeschwindigkeit die durch die Lochplatte ragenden Blätter und schert sie von den anderen, verwertbaren, Pflanzenteilen ab. Die über der Lochplatte angeordnete Kammer ist durch mehrere Trennelemente unterteilt. Die Trennelemente sind ebenfalls drehbar und haben in ihren Wandungen Öffnungen, um die Pflanzen aufzunehmen und entlang der Oberfläche der Lochplatte derart zu bewegen, dass sämtliche Blätter derart in die Löcher der Lochplatte zu liegen kommen können, dass sie vom Fadenelement abgeschert werden können. Sobald die Blätter von den Pflanzen entfernt sind, kann die Vorrichtung abgestellt werden und die verwertbaren Pflanzenteile entnommen werden. Die Blätter sammeln sich am Boden des konischen, behälterförmigen Gehäuses und können später entfernt werden. Wenn mit dieser Vorrichtung grössere Mengen an Pflanzen verarbeitet werden müssen, muss sie mehrmals befüllt und entleert werden, das heisst die Vorrichtung abgestellt werden, entleert werden, bevor sie für einen weiteren Pflanzenbatch zur Verfügung steht.

Um diesem Nachteil abzuhelfen, wurde in der US20120279193 A1 eine Vorrichtung vorgeschlagen, die eine Trommel enthält, welche kontinuierlich mit Pflanzen beschickt werden kann. Die Trommel ist als ein drehbares zylinderförmiges Rohr aus einem Lochblech ausgebildet. Die aus der Trommel herausragenden Blätter werden von einer Schneidvorrichtung erfasst und von der Pflanze getrennt. Die von der Schneidvorrichtung erfassten Blätter können einem Sammelcontainer zugeführt werden.

Ein Nachteil dieser Vorrichtung ist wiederum darin zu sehen, dass der Durchsatz gering ist, weil die Schneidvorrichtung nur einmal pro Trommelumdrehung mit der Pflanze in Kontakt kommt. Die Schneidvorrichtung befindet sich unterhalb der Trommel und ist als eine Klinge ausgebildet, die während des Schneidvorgangs in im Wesentlichen linienförmigen Kontakt mit der Pflanze kommt. Das heisst, die Schneidfläche entspricht einer Linie, welche im Wesentlichen der Trommellänge entspricht. Wenn Blätter von einer Pflanzenblüte getrennt werden sollen, die am gesamten Umfang der Blüte angeordnet sind, muss die Blüte eine Vielzahl von Trommelumdrehungen durchlaufen, bis sämtliche Blätter von der Blüte getrennt sind. Daher weist diese Vorrichtung nur einen geringen Durchsatz auf. Um diesem Nachteil abzuhelfen, wurde bereits vorgeschlagen, zwei Trommeleinheiten hintereinander, also in Serie, anzuordnen, womit vermutlich Qualitätsmängel eines unzureichenden Zuschnitts behoben werden sollen. Allerdings lässt sich durch das Hintereinanderschalten von zwei gleichartigen Trommeleinheiten der Durchsatz nicht vergrössern. Um den Durchsatz zu erhöhen, ist es selbstverständlich möglich, mehrere Trommeleinheiten parallel zu betreiben. Allerdings löst diese Variante keine allfälligen Qualitätsprobleme. Zudem erhöht sich der Energiebedarf, der Wartungsaufwand sowie der Platzbedarf, sodass auch diese Verbesserung nur begrenzt zu einer Erhöhung der Wirtschaftlichkeit einer Hanfernte betragen kann. Die Trommeleinheiten müssen von Hand beschickt werden, sodass auch die Kosten der manuellen Arbeit sich nachteilig auf die Wirtschaftlichkeit der vorbekannten Trommeleinheiten auswirken.

Daher besteht ein Bedarf an einer verbesserten Vorrichtung, mittels welcher der Pflanzendurchsatz erhöht werden kann, das heisst, die Aufenthaltsdauer jeder Pflanze in der Vorrichtung verringert ist.

### Aufgabe der Erfindung

Es ist Aufgabe der Erfindung, eine Vorrichtung zu entwickeln, mittels welcher der Durchsatz an Pflanzen durch die Verarbeitungsvorrichtung erhöht werden kann.

Insbesondere soll mit der verbesserten Vorrichtung nicht nur der Verarbeitungsdurchsatz der Pflanzen erhöht werden, sondern gleichzeitig die Qualität der Pflanzen gesteigert werden.

### Beschreibung der Erfindung

Die Lösung der Aufgabe der Erfindung erfolgt durch eine Vorrichtung gemäss Anspruch 1. Vorteilhafte Ausführungsbeispiele der Vorrichtung sind Gegenstand der Ansprüche 2 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für die erfindungsgemässe Vorrichtung. Die Beschreibung einer bestimmten Vorrichtung ist nur als beispielhaft anzusehen. In der Beschreibung und den Ansprüchen werden die Begriffe "enthalten", "umfassen", "aufweisen" als "enthalten, aber nicht beschränkt auf" interpretiert.

Im Folgenden wird der Begriff Öffnung für Öffnungen beliebigen Querschnitts verwendet. Insbesondere kann eine Öffnung kreisförmig oder oval ausgebildet sein.

Der Begriff Antriebseinheit umfasst manuelle Antriebseinheiten, elektrische Antriebseinheiten, hydraulische Antriebseinheiten, pneumatische Antriebseinheiten oder Antriebseinheiten, die Verbrennungskraftmaschinen umfassen. Anstelle des Begriffs Antriebseinheit kann auch der Begriff Motor gebraucht werden.

Die erfindungsgemässe Vorrichtung zur Verarbeitung von Pflanzen umfasst ein Gehäuse, welches eine Trennvorrichtung enthält, wobei die Pflanzen auf einem Auflageelement gelagert sind, wobei das Auflageelement zwischen den Pflanzen und der Trennvorrichtung angeordnet ist. Eine Fördervorrichtung zur Förderung der Pflanzen ist vorgesehen, mittels welcher die Pflanzen über die Trennvorrichtung bewegbar sind. Die Trennvorrichtung dient der Trennung der verwertbaren Pflanzeneile von den nicht verwertbaren Pflanzenteilen, beispielsweise der Trennung von Knospen oder Blüten von unerwünschten Blättern.

Die Trennvorrichtung kann mittels einer Antriebseinheit angetrieben werden. Insbesondere kann die Trennvorrichtung eine Drehbewegung ausführen. Nach einem Ausführungsbeispiel kann die Trennvorrichtung ein Trennelement umfassen. Diese Formulierung beinhaltet die Variante, dass die Trennvorrichtung mehrere Trennelemente umfassen kann. Insbesondere kann das Trennelement drehbar sein. Wenn mehrere Trennelemente vorgesehen sind, kann jedes der Trennelemente drehbar sein oder nur ein Teil der Trennelemente drehbar sein. Nach einem Ausführungsbeispiel kann die Drehrichtung des Trennelements variierbar sein.

Nach einem Ausführungsbeispiel kann das Trennelement ein Element aus der Gruppe der Messer, Fadenelemente, Rotorblätter umfassen. Die Wahl des Trennelements kann von der zu verarbeitenden Pflanzensorte abhängen. Die Wahl des Trennelements kann auch davon abhängig sein, ob die Pflanze unmittelbar nach der Ernte oder nach einer Lagerungszeit verarbeitet wird. Insbesondere kann die Wahl des Trennelements davon abhängen, ob die Pflanze teilweise oder vollständig getrocknet ist.

Für besonders präzise Schneidergebnisse kann eine Klinge zum Einsatz kommen. Für Pflanzen mit geringer Zähigkeit oder Pflanzen, die Flüssigkeiten oder Harze absondern, kann ein Fadenelement zum Einsatz kommen. Die Trennung der unerwünschten Pflanzenteile von den erwünschten Pflanzenteilen kann im Wesentlichen durch Scherkräfte erfolgen. Ein weiterer Vorteil der Verwendung eines Fadenelements liegt in der geringen Anfälligkeit des Fadenelements für Verschmutzungen. Das oder die Fadenelemente rotieren mit derart hoher Rotationsgeschwindigkeit, dass auf dem Fadenelement befindliche Pflanzenteile, Fasern, Harze oder Flüssigkeiten weggeschleudert werden. Hierdurch ist ein Dauerbetrieb der Vorrichtung möglich. Ein Abstellen der Vorrichtung und eine zeit- und arbeitsintensive Reinigung der Trennelemente kann entfallen.

Rotorblätter können eingesetzt werden, wenn die Pflanzen durch Knicken bereits brechen, sodass ein Durchtrennen der Pflanzen bereits durch den durch die Rotorblätter erzeugbaren Luftdruck erfolgen kann.

Alternativ oder ergänzend können die Rotorblätter auch Messer oder Fadenelemente enthalten.

Nach einem Ausführungsbeispiel ist die Trennvorrichtung in einem Abstand von 0.01 bis 15 mm unterhalb des Auflageelements angeordnet. Insbesondere kann der Abstand der Trennvorrichtung vom Auflageelement einstellbar sein.

Nach einem Ausführungsbeispiel enthält die Trennvorrichtung eine Antriebseinheit, mittels welcher mindestens ein Trennelement antreibbar ist. Insbesondere können mehrere Trennelemente über ein Antriebsmittel von einer gemeinsamen Antriebseinheit antreibbar sein. Das Antriebsmittel kann ein Element aus der Gruppe der Spulen, Riemen, Zahnräder enthalten.

Nach einem Ausführungsbeispiel umfasst das Auflageelement ein Element aus der Gruppe der Lochbleche oder Gitter. Insbesondere kann das Auflageelement eine Mehrzahl von Öffnungen umfassen. Insbesondere können die Öffnungen eine maximale Öffnungsweite von 0.01 bis 25 mm aufweisen. Nach einem Ausführungsbeispiel kann das Auflageelement bewegbar sein.

Nach einem Ausführungsbeispiel kann eine Schüttelvorrichtung vorgesehen sein, um das Auflageelement oder das Gehäuse zur Förderung der Pflanzen zu schütteln.

Nach einem Ausführungsbeispiel kann die Vorrichtung eine Fördervorrichtung umfassen, die ein Element aus der Gruppe der Förderbänder, Schüttelvorrichtungen, Gebläse zur Förderung der Pflanzen umfasst.

Nach einem Ausführungsbeispiel kann eine Absaugvorrichtung zum Abtransport des Schnittguts umfassen. Die Absaugvorrichtung dient somit zur Entfernung der Pflanzenteile, die durch die Trennvorrichtung abgetrennt worden sind, dienen.

Nach einem Ausführungsbeispiel kann das Auflageelement einen Neigungswinkel zur Horizontalebene einschliessen, der grösser als 0° ist und bis zu 60° beträgt.

Insbesondere können mittels der Vorrichtung nach einem der Ausführungsbeispiele Cannabispflanzen und andere Pflanzen oder Teile derselben verarbeitet werden. Insbesondere können Blätter von bereits in vorgängigen Arbeitsschritten erhaltenen Blüten getrennt werden.

Mit der erfindungsgemässen Vorrichtung kann somit ein wesentlich höherer Durchsatz im Vergleich zu den vorbekannten Vorrichtungen erzielt werden.

Die Vorrichtung kann als Teil einer automatisierten Verarbeitungsanlage eingesetzt werden. Als wesentliche Vorteile der automatisierten Verarbeitungsanlage ergeben sich der erhöhte Durchsatz sowie eine Verringerung an Personalkosten. Die Pflanzen für die Vorrichtung können in einer vorgeschalteten Trennvorrichtung, beispielsweise gemäss der Patentanmeldung EP18193927.3 der Anmelderin vorbereitet werden. Der Inhalt dieser Patentanmeldung wird durch diese Bezugnahme in die vorliegende Anmeldung vollumfänglich aufgenommen.

Der Wartungs- und Reinigungsaufwand der Vorrichtung wird massiv reduziert.

Die Vorrichtung wird als "Baukasten" oder Modul ausgeführt und kann an unterschiedliche Bedarfsmengen angepasst werden. Insbesondere können verschiedene Baugrössen der Vorrichtung zum Einsatz kommen.

Neben dem hohen Durchsatz kann durch einen kontinuierlichen Prozessfluss eine hohe gleichbleibende Qualität der zu verwertenden Pflanzenteile erreicht werden.

### Kurzbeschreibung der Zeichnungen

Nachfolgend wird die erfindungsgemässe Vorrichtung anhand einiger Ausführungsbeispiele dargestellt. Es zeigen
- Fig. 1: eine Aufsicht auf eine Vorrichtung nach einem ersten Ausführungsbeispiel,
- Fig. 2: eine Seitenansicht der Vorrichtung gemäss Fig. 1,
- Fig. 3: einen Schnitt durch die Vorrichtung gemäss Fig. 2 entlang der Schnittlinie A-A,
- Fig. 4: ein Detail der Fig. 3,
- Fig. 5: ein Detail eines Auflageelements,
- Fig. 6: eine Ansicht der Vorrichtung nach dem ersten Ausführungsbeispiel,
- Fig. 7: eine Ansicht einer Vorrichtung nach einem zweiten Ausführungsbeispiel,
- Fig. 8: eine Seitenansicht der Vorrichtung gemäss Fig. 7,
- Fig. 9: einen Schnitt durch die Vorrichtung gemäss Fig. 8.

### Detaillierte Beschreibung der Zeichnungen

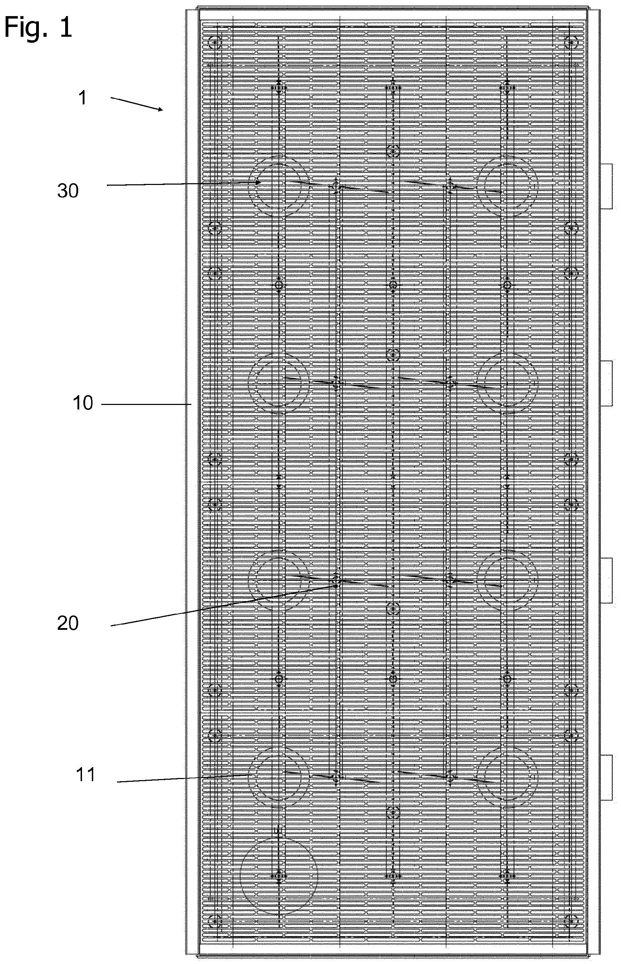

Fig. 1 zeigt eine Aufsicht auf eine Vorrichtung 1 nach einem ersten Ausführungsbeispiel, umfassend ein Gehäuse 10, welches eine Schnittgutkammer 23 enthaltend eine Trennvorrichtung 20 und eine Antriebskammer 24 enthält. Im Betriebszustand sind die Pflanzen auf einem Auflageelement 11 gelagert, wobei das Auflageelement 11 zwischen den Pflanzen und der Trennvorrichtung 20 angeordnet ist. Mit der Trennvorrichtung 20 werden unerwünschte Pflanzenteile von der Pflanze entfernt, wobei die unerwünschten Pflanzenteile ein Schnittgut ausbilden. Das Schnittgut befindet sich in der Schnittgutkammer 23. Insbesondere können Blätter der Pflanzen als Schnittgut anfallen. Eine Absaugvorrichtung 30 zur Entfernung des Schnittguts ist vorgesehen, mittels welcher das Schnittgut von der Trennvorrichtung 20 aus der Schnittgutkammer 23 entfernt werden kann. Die Absaugvorrichtung 30 ist gemäss diesem Ausführungsbeispiel als ein Absaugrohr ausgebildet, mittels welchem das Schnittgut aus der Schnittgutkammer 23 entfernt wird. Die Schnittgutkammer 23 ist von der Antriebskammer 24 durch einen Zwischenboden 13 getrennt.

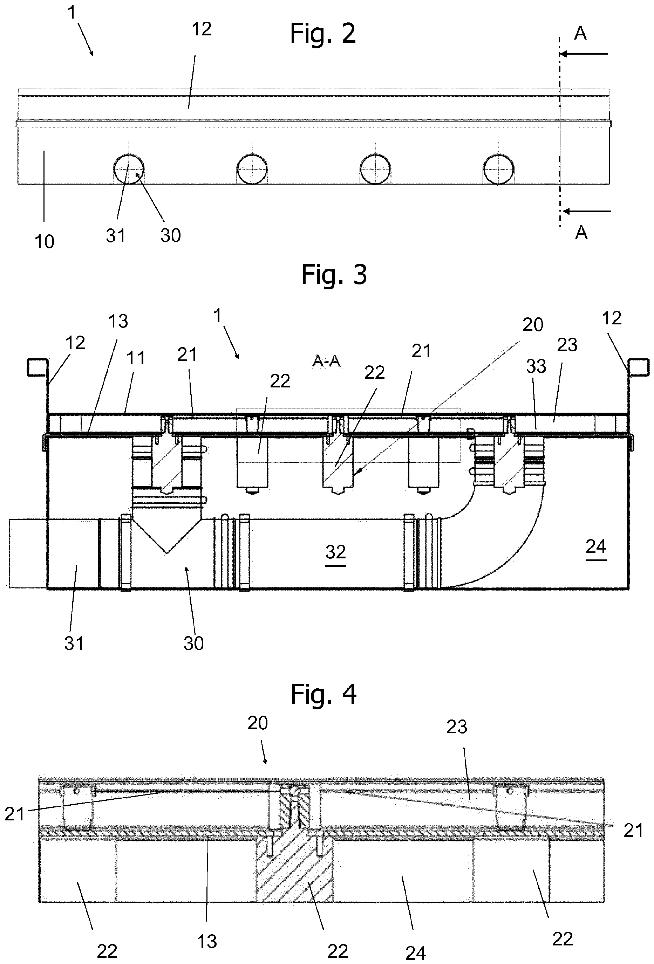

Fig. 2 zeigt eine Seitenansicht der Vorrichtung gemäss Fig. 1. In der Seitenansicht sind das Gehäuse 10 sowie vier Auslässe 31 für die Absaugvorrichtung 30 sichtbar. Über die Auslässe 31 wird Luft aus der Schnittgutkammer 23 abgesaugt. Das Auflageelement 11 ist in Fig. 2 nicht sichtbar, da es von einer Randschiene 12 verdeckt ist. Die Randschiene 12 dient dazu, die Pflanzen auf dem Auflageelement 11 zu halten.

Fig. 3 zeigt einen Schnitt durch die Vorrichtung gemäss Fig. 2 entlang der Schnittlinie A-A in Fig. 2. Das Gehäuse 10 ist aufgeschnitten dargestellt. Die obere Begrenzung des Gehäuses wird in diesem Ausführungsbeispiel durch das Auflageelement 11 und die Randschienen 12 gebildet. Unterhalb des Auflageelements 11 befindet sich die Trennvorrichtung 20, welche in der Schnittgutkammer 23 angeordnet ist. Die Trennvorrichtung 20 umfasst gemäss diesem Ausführungsbeispiel mehrere Trennelemente 21 sowie ihre zugehörigen Antriebseinheiten 22. Die Trennelemente 21 sind drehbar, wenn sie von den zugehörigen Antriebseinheiten 22 angetrieben werden. Die Trennelemente 21 sind gemäss diesem Ausführungsbeispiel als Fadenelemente ausgebildet. Die Drehrichtung jedes der Trennelemente 21 kann unabhängig von den anderen Trennelementen variierbar sein. In Fig. 3 sind zwei Trennelemente 21 sichtbar sowie insgesamt fünf Antriebseinheiten 22, von den drei geschnitten dargestellt sind. Der Übersichtlichkeit halber wurden nicht alle Antriebseinheiten 22 in Fig. 3 mit einem Bezugszeichen versehen.

Wenn die Trennelemente 21 als Fadenelemente ausgebildet sind, können die nicht verwertbaren Pflanzenteile so weit zerkleinert werden, dass sie eine staubförmige Konsistenz erhalten. Ein derartiges staubförmiges Schnittgut kann besonders einfach durch die Absaugvorrichtung 30 aus der Schnittgutkammer 23 entfernt werden. Durch die Verwendung von Fadenelementen als Trennelementen 21 kann somit eine Verschmutzung der Schnittgutkammer 23 effizient verhindert werden.

In Fig. 3 sind auch weitere Details der Absaugvorrichtung dargestellt. Die Absaugvorrichtung 30 umfasst ein Rohrelement 32, welches vom Auslass 31 in Richtung des Zwischenbodens 13 führt. Das Rohrelement 32 endet somit mit einer Einlassöffnung 33 am Zwischenboden 13, an welchem es befestigt ist. Die Luft strömt somit vom Auflageelement 11 durch die Öffnungen desselben zum Zwischenboden 13, von dort in die Einlassöffnungen 33, durch das Rohrelement 32 zu den Auslässen 31 des Rohrelements 32. Die Luft durchströmt somit das Rohrelement 32 von der oder den am Zwischenboden 13 angeordneten Einlassöffnungen 33 bis zu den Auslässen 31. Die Auslässe 31 können über weitere Leitungen mit einem nicht dargestellten Sauggebläse in Verbindung stehen. Durch die Einlassöffnungen 33 im Zwischenboden 13 kann lokal ein Unterdruck in der Schnittgutkammer 23 erzeugt werden, sodass das Schnittgut mit der Luft abgesaugt wird, wodurch die Trennvorrichtungen 20 frei von Schnittgut gehalten werden können. Gemäss dem vorliegenden Ausführungsbeispiel ist eine Mehrzahl derartiger Rohrelemente 32 vorgesehen, sodass sich an keiner Stelle des Zwischenbodens 13 Schnittgut ansammeln kann.

Am Austrittsende der Vorrichtung können dann die Bestandteile der Pflanze, insbesondere die Blüten direkt und kontinuierlich entnommen werden, die für eine Weiterverarbeitung vorgesehen sind. Die Trennvorrichtungen 20 befinden sich unterhalb im Wesentlichen der Gesamtfläche des Auflageelements 11. Daher steht im Wesentlichen die Gesamtfläche des Auflageelements 11 für den Trennvorgang zur Verfügung. Insbesondere steht mindestens 80 % der Gesamtfläche des Auflageelements für den Trennvorgang zur Verfügung. Von den Trennvorrichtungen 20 wird somit mindestens 80 % der Gesamtfläche des Auflageelements 11 erfasst.

Die Absaugvorrichtung 30 kann auch derart ausgebildet sein, dass die abgetrennten, unerwünschten Pflanzenteile, die mit der Absaugvorrichtung 30 abgesaugt werden, in einem separaten Sammelbehälter gesammelt werden, was zeichnerisch nicht dargestellt ist.

Fig. 4 zeigt ein Detail der Fig. 3, insbesondere eine Ansicht der Trennvorrichtung 20 im Schnitt sowie zweier weiterer Trennvorrichtungen 20. Die Trennvorrichtungen 20 sind in einem Zwischenboden 13 des Gehäuses 10 gehalten. Die Trennelemente 21 befinden sich oberhalb des Zwischenbodens 13. Gemäss dem vorliegenden Ausführungsbeispiel besteht jedes der Trennelemente 21 aus zwei Fadenelementen.

Gemäss dem vorliegenden Ausführungsbeispiel ist das Trennelement 21 der Trennvorrichtung 20 in einem Abstand von 0.01 bis 15 mm unterhalb des Auflageelements 11 angeordnet.

In Fig. 4 ist auch der Zwischenboden 13 gezeigt, der die Schnittgutkammer 23 von der darunter liegenden Antriebskammer 24 trennt. Durch den Zwischenboden 13 wird verhindert, dass Schnittgut in die Antriebskammer 24 gelangt.

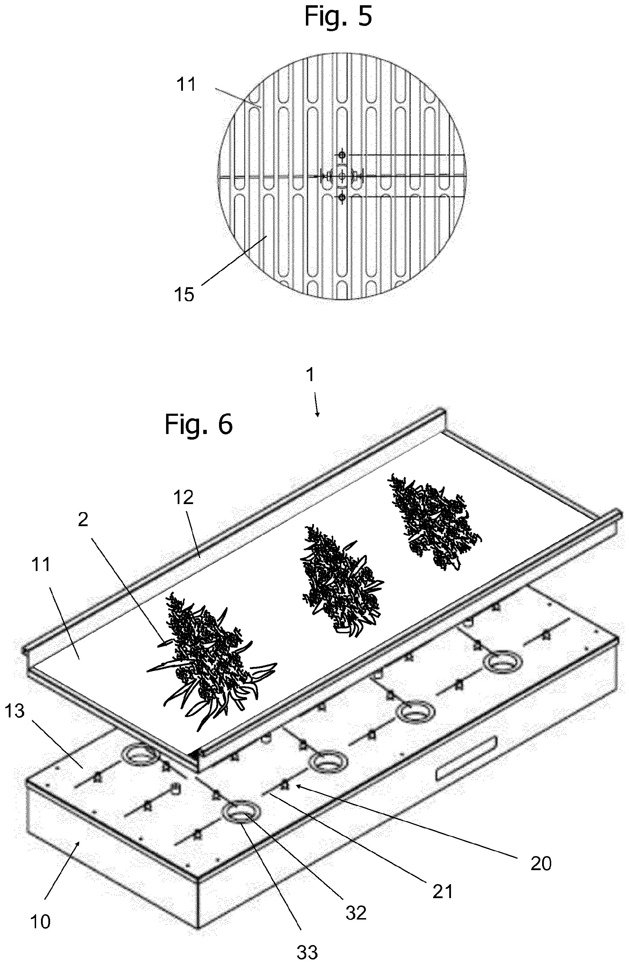

Fig. 5 zeigt ein Detail eines Auflageelements 11, das als Lochblech ausgebildet ist. In Fig. 1 wird gezeigt, dass das Auflageelement 11 eine Mehrzahl von Öffnungen 15 umfasst. Die Öffnungen können eine maximale Öffnungsweite von 0.01 bis 25 mm aufweisen.

Fig. 6 zeigt die Vorrichtung gemäss dem ersten Ausführungsbeispiel, gemäss welchem das Auflageelement 11 vom Zwischenboden 13 ein Stück weit entfernt ist, um die Anordnung der Einlassöffnungen 33 der Rohrelemente 32 sowie die Anordnung der Trennvorrichtungen 20 mit den zugehörigen Trennelementen 21 zu zeigen. Die vorliegende Darstellung enthält insgesamt 23 Trennvorrichtungen 20, von denen allerdings nur ein Teil sichtbar ist. Die Trennvorrichtungen 20 sind gemäss diesem Ausführungsbeispiel in fünf Reihen angeordnet, die je drei Trennvorrichtungen 20 enthalten, sowie in vier Reihen, die je zwei Trennvorrichtungen 20 enthalten. Die vier Reihen, die je zwei Trennvorrichtungen 20 enthalten, enthalten auch die Einlassöffnungen 33 der Saugvorrichtungen 30. Die dargestellte Anzahl und Anordnung der Trennvorrichtungen 20 sowie der Saugvorrichtungen 30 ist nur als ein exemplarisches Ausführungsbeispiel anzusehen und ist abhängig vom Durchmesser der Trennelemente 21 der Trennvorrichtungen 20 sowie der Breite und der Länge des Auflageelements 11.

Die Öffnungen 15 im Auflageelement 11 wurden der Übersichtlichkeit halber weggelassen. Auf dem Auflageelement 11 befinden sich Pflanzen 2, welche beispielsweise Blätter aufweisen, die durch die Trennvorrichtungen 20 entfernt werden.

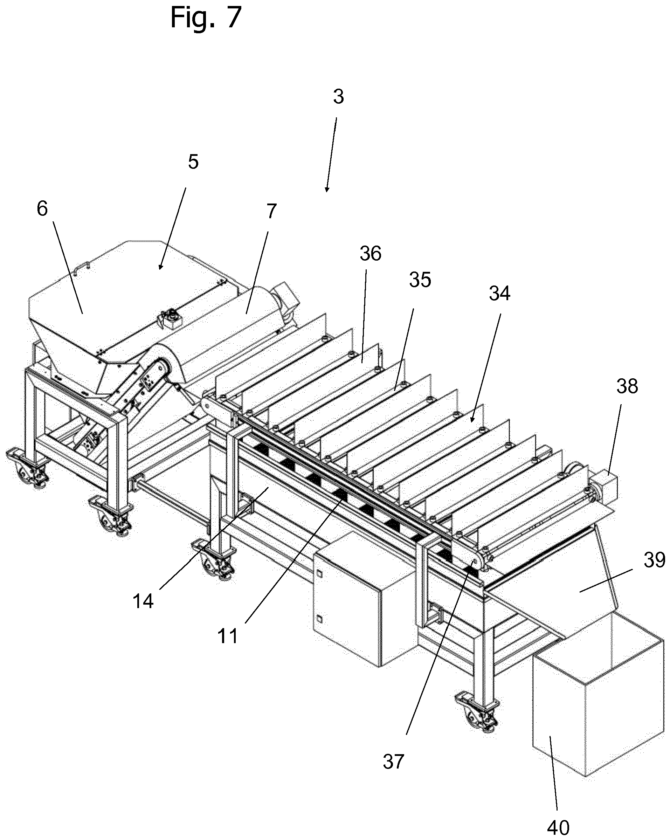

Fig. 7 zeigt eine Vorrichtung 3 nach einem zweiten Ausführungsbeispiel, gemäss welchem eine Fördervorrichtung 34 vorgesehen ist, mittels welcher die Pflanzen über das Auflageelement 11 bewegt werden. Die Fördervorrichtung 34 umfasst ein Förderband 35, welches Schiebeelemente 36 umfasst, welche die Pflanzen erfassen und über das Auflageelement 11 transportieren. Das Förderband 35 ist oberhalb des Auflageelements 11 angeordnet. Das Förderband 35 kann auf Rollenelementen 37 umlaufen. Zumindest eines dieser Rollenelemente 37 kann eine Antriebseinheit 38 umfassen. Das Förderband 35 weist eine Mehrzahl von Schiebeelementen 36 auf, zwischen denen Zwischenräume ausgebildet sind, um die Pflanzen aufzunehmen. Die Schiebeelemente 36 können insbesondere als Laschen oder Rechen ausgebildet sein.

Die Pflanzen werden derart über das Auflageelement 11 bewegt, dass die unerwünschten Pflanzenteile, beispielsweise die Blätter der Pflanzen, durch das Auflageelement 11 hindurch ragen können, um von den in dieser Darstellung nicht sichtbaren Trennelementen der Trennvorrichtungen 20 von verwertbaren Pflanzenteilen abgetrennt zu werden.

Die verwertbaren Pflanzenteile können über eine Rampe 39 in einen Sammelbehälter 40 gelangen.

Die Pflanzen werden der Vorrichtung 3 gemäss diesem Ausführungsbeispiel über eine Steigfördervorrichtung 5 zugeführt. Die Pflanzen können einem Aufgabebehälter 6 entnommen werden und mittels einer Transportvorrichtung 7 zum Auflageelement 11 transportiert werden. Die Steigfördervorrichtung 5 kann von der Vorrichtung 3 abgekoppelt werden. Der Aufgabebehälter 6 kann an einer anderen Stelle mit den Pflanzen befüllt werden. Gegebenenfalls können die Pflanzen schon in einem oder mehreren vorhergehenden Arbeitsschritten vorbereitet werden.

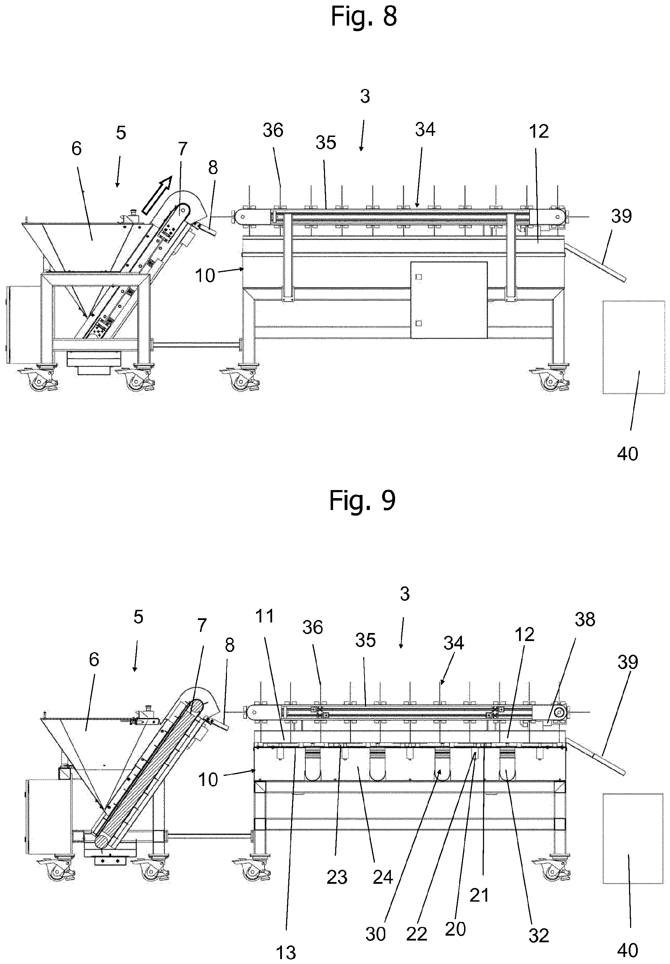

Fig. 8 zeigt eine Seitenansicht der Vorrichtung 3 gemäss Fig. 7. Die Vorrichtung 3 eignet sich zum kontinuierlichen Bearbeiten der Pflanzen. Die Pflanzen werden der Vorrichtung 3 über die Steigfördervorrichtung 5 zugeführt. Die Steigfördervorrichtung 5 kann einen Aufgabebehälter 6 umfassen, welcher die von der Vorrichtung 3 zu verarbeitenden Pflanzen enthält. Der Aufgabebehälter 5 ist als konischer Behälter ausgebildet, an dessen Unterseite sich eine Öffnung befindet, um die Pflanzen im Betriebszustand auf die Transportvorrichtung 7 fallen zu lassen. Die Transportvorrichtung 7 kann ein umlaufendes Förderband umfassen. Gegebenenfalls können Schiebeelemente vorgesehen sein, die ähnlich der Schiebeelemente 36 ausgebildet sein können, was in Fig. 9 sichtbar ist. Insbesondere können die Schiebeelemente als Laschen ausgebildet sein. Die Pflanzen werden mittels der Transportvorrichtung 7 auf eine Höhe transportiert, die eine Übergabe derselben auf die Vorrichtung 3 ohne manuelle Eingriffe ermöglichen. Die Geschwindigkeit der Transportvorrichtung 7 kann verändert werden, wodurch der Durchsatz der Pflanzen verändert werden kann. Das geförderte Volumen an Pflanzen kann durch die Höhe der Schiebeelemente verändert werden. Mit zunehmender Höhe der Schiebeelemente vergrössert sich das Fördervolumen, mit abnehmender Höhe der Schiebeelemente verringert sich das Fördervolumen entsprechend.

Nicht dargestellt ist eine Variante gemäss welcher oberhalb des Aufgabebehälters 5 eine Pflanzenverarbeitungsvorrichtung beispielsweise gemäss der hängigen EP-Anmeldung EP18193927.3 angeordnet ist. Die mit der Pflanzenverarbeitungsvorrichtung gemäss der EP-Anmeldung EP18193927.3 erhaltenen Pflanzen, also insbesondere die von Stängeln befreiten Blüten, können direkt von der Pflanzenverarbeitungsvorrichtung in den Aufgabebehälter 5 eingebracht werden. Die durch die Pflanzenverarbeitung entfernten Stängel können über ein Leitblech oder ein Förderband entfernt werden. Die Stängel können bei Bedarf ebenfalls weiterverarbeitet werden, beispielsweise in einem Häcksler.

Die Vorrichtung 3 umfasst das Förderband 35 sowie das Gehäuse 10, welches durch das hier nicht sichtbare Auflageelement 11 abgedeckt ist. Das Auflageelement 11 ist durch die Randschiene 12 verdeckt.

Mittels der Schiebeelemente 36 werden die Pflanzen von der Entladerampe 8 der Transportvorrichtung 7 erfasst und auf das Auflageelement 11 abgelegt. Das Auflageelement 11 ist ortsfest. Das Förderband 35 ist oberhalb des Auflageelements 11 angeordnet. Die Pflanzen werden durch die auf der Unterseite des Förderbands 35 liegenden Schiebeelemente 36 über das Auflageelement 11 geführt, was in Fig. 9 sichtbar ist.

Fig. 9 ist ein Längsschnitt durch die Vorrichtung 3 gemäss Fig. 8, welcher das Innere des Gehäuses 10 zeigt, durch welches die Schnittebene verläuft. Das Gehäuse 10 weist als obere Begrenzung das Auflageelement 11 auf. Unterhalb des Auflageelements 11, welches als ein plattenförmiges Element ausgebildet ist, befindet sich ein Zwischenboden 13. Der Zwischenboden 13 ist gemäss diesem Ausführungsbeispiel parallel zum Auflageelement 11 angeordnet. Zwei Randschienen 12 bilden die seitliche Begrenzung des Auflageelements 11, welche verhindern, dass Pflanzen vom Auflageelement 11 fallen. Die vordere Randschiene 12 liegt in dieser Darstellung vor der Zeichnungsebene und ist daher nicht sichtbar.

Im Zwischenraum zwischen dem Zwischenboden 13 und dem Auflageelement 11 sind mehrere Trennvorrichtungen 20 angeordnet. Der Zwischenraum zwischen dem Auflageelement 11 und dem Zwischenboden 13 bildet die Schnittgutkammer 23 aus. Die Pflanzen werden derart über das Auflageelement 11 bewegt, dass die unerwünschten Pflanzenteile, beispielsweise die Blätter der Pflanzen, durch das Auflageelement 11 hindurch ragen können, um von den Trennelementen 21 der Trennvorrichtungen 20 vom verwertbaren Pflanzenteil abgetrennt zu werden. Die Trennvorrichtungen 20 können wie im ersten Ausführungsbeispiel ausgebildet sein. Sämtliche in Zusammenhang mit dem ersten Ausführungsbeispiel erwähnte Varianten können auch für das zweite Ausführungsbeispiel zum Einsatz kommen, daher soll hierzu auf die vorhergehende Beschreibung verwiesen werden.

Wie im vorherigen Ausführungsbeispiel kann eine Absaugvorrichtung 30 verwendet werden, um abgetrennte Pflanzenteile aus dem Zwischenraum zu entfernen. Das Schnittgut wird somit mit der Absaugvorrichtung 30 aus der Schnittgutkammer 23 entfernt. Unterhalb des Zwischenbodens 13 befindet sich die Antriebskammer 24.

Das Förderband 35 kann auf Rollenelementen 37 umlaufen. Zumindest eines dieser Rollenelemente 37 kann eine Antriebseinheit 38 umfassen. Das Förderband 35 weist eine Mehrzahl von Schiebeelementen 36 auf, zwischen denen Zwischenräume ausgebildet sind, um die Pflanzen aufzunehmen.

Die Vorrichtung 1, 3 gemäss den vorliegenden Ausführungsbeispielen kann als mobile Vorrichtung ausgebildet sein. Insbesondere kann das Gehäuse 10 der Vorrichtung mit Rollen versehen sein, sodass die Vorrichtung transportierbar ist. Auch die Steigfördervorrichtung 5 kann als mobile Steigfördervorrichtung ausgebildet sein. Gegebenenfalls kann die Steigfördervorrichtung 5 auch mit einer mobilen Pflanzenverarbeitungsvorrichtung gemäss EP-Anmeldung EP18193927.3 gekoppelt werden.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nichtausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Vorrichtung (1,3) zur Verarbeitung von Pflanzen, umfassend ein Gehäuse (10), welches eine Trennvorrichtung (20) enthält, wobei die Pflanzen auf einem Auflageelement (11) gelagert sind, wobei das Auflageelement (11) zwischen den Pflanzen und der Trennvorrichtung (20) angeordnet ist, **dadurch gekennzeichnet, dass** eine Absaugvorrichtung (30) zur Förderung der Pflanzen vorgesehen ist, mittels welcher die Pflanze über die Trennvorrichtung (20) bewegbar ist.

2. Vorrichtung (1,3) nach Anspruch 1, wobei die Trennvorrichtung (20) ein Trennelement (21) umfasst.

3. Vorrichtung (1,3) nach Anspruch 2, wobei das Trennelement (21) drehbar ist.

4. Vorrichtung (1,3) nach Anspruch 3, wobei die Drehrichtung des Trennelements (21) variierbar ist.

5. Vorrichtung (1,3) nach einem der Ansprüche 2 bis 4, wobei das Trennelement (21) ein Element aus der Gruppe der Messer, Fäden, Rotorblätter umfasst.

6. Vorrichtung (1,3) nach einem der vorhergehenden Ansprüche, wobei die Trennvorrichtung (20) in einem Abstand von 0.01 bis 15 mm unterhalb des Auflageelements (11) angeordnet ist.

7. Vorrichtung (1,3) nach einem der vorhergehenden Ansprüche, wobei die Trennvorrichtung (20) eine Antriebseinheit (22) enthält, mittels welcher mindestens ein Trennelement (21) antreibbar ist.

8. Vorrichtung (1,3) nach Anspruch 7, wobei mehrere Trennelemente (21) über ein Antriebsmittel einer einzigen Antriebseinheit (22) antreibbar sind.

9. Vorrichtung (1,3) nach Anspruch 8, wobei das Antriebsmittel ein Element aus der Gruppe der Spulen, Riemen, Zahnräder enthält.

10. Vorrichtung (1,3) nach einem der vorhergehenden Ansprüche, wobei das Auflageelement (11) ein Element aus der Gruppe der Lochbleche oder Gitter umfasst.

11. Vorrichtung (1,3) nach einem der vorhergehenden Ansprüche, wobei das Auflageelement (11) eine Mehrzahl von Öffnungen (15) umfasst.

12. Vorrichtung (1,3) nach Anspruch 11, wobei die Öffnungen (15) eine maximale Öffnungsweite von 0.01 bis 25 mm aufweisen.

13. Vorrichtung (1,3) nach einem der vorhergehenden Ansprüche, wobei das Auflageelement (11) einen Neigungswinkel zur Horizontalebene einschliesst, der grösser als 0° ist und bis zu 60° beträgt.

14. Vorrichtung (1,3) nach einem der vorhergehenden Ansprüche, wobei die Absaugvorrichtung (30) ein Element aus der Gruppe der Förderbänder, Schüttelvorrichtungen, Gebläse oder Absaugvorrichtungen umfasst.

15. Verwendung der Vorrichtung (1,3) nach einem der vorhergehenden Ansprüche zur Verarbeitung von Hanf.
